# EUROPÄISCHE PATENTSCHRIFT

(11) **EP 3 440 376 B1**
(45) Veröffentlichungstag und Bekanntmachung des Hinweises auf die Patenterteilung: **22.04.2020**
(21) Anmeldenummer: 17708788.9
(22) Anmeldetag: 06.03.2017
(51) Int. Cl.: F16F 9/46

(54) **VERSTELLBARE DÄMPFVENTILEINRICHTUNG FÜR EINEN SCHWINGUNGSDÄMPFER**
ADJUSTABLE DAMPING VALVE DEVICE FOR A VIBRATION DAMPER
ENSEMBLE SOUPAPE D'AMORTISSEMENT RÉGLABLE POUR UN AMORTISSEUR DE VIBRATIONS

(30) Priorität: 06.04.2016 DE 102016205651
(43) Veröffentlichungstag der Anmeldung: 13.02.2019
(73) Patentinhaber: ZF Friedrichshafen AG, 88046 Friedrichshafen (DE)
(72) Erfinder: KESS, Romano, 97688 Bad Kissingen (DE); SAUERBREY, Achim, 97422 Schweinfurt (DE)
(74) Vertreter: ZF Friedrichshafen AG
(86) Internationale Anmeldenummer: PCT/EP2017/055111
(87) Internationale Veröffentlichungsnummer: WO 2017/174269

(56) Entgegenhaltungen:
- EP-A1- 2 693 075
- EP-A1- 2 975 292
- WO-A1-91/12452
- DE-A1- 4 334 007
- DE-A1-102009 059 808
- DE-A1-102014 215 563
- DE-C1- 3 800 288
- US-A- 4 958 704

## Beschreibung

Die Erfindung betrifft ein Dämpfventil gemäß dem Oberbegriff von Patentanspruch 1.

Die DE 10 2014 215 563 A1 beschreibt eine verstellbare Dämpfventileinrichtung, die einen elektromagnetisch angetriebenen Aktuator umfasst. Eine Spule in Verbindung mit einem scheibenförmigen Rückschlusskörper und einem Anker, der mit einem Ventilkörper verbunden ist, bilden einen Kreis für einen Magnetfluss. Zur Verstellung der Dämpfkraft wird der Magnetflusskreis mit einem pulsweitenmodulierten Strom (PWM) belastet, um über ein Zeitfenster eine definierte Betriebsposition einzunehmen, z. B. um eine größere Dämpfkraft zu erzeugen. Der Rückschlusskörper ist zwar axial fixiert, bildet jedoch mit einer Innenwandung eines an einer Kolbenstange fixierten Ventilgehäuses eine Spielpassung.

Ein grundsätzliches Problem bei einer verstellbaren Dämpfventileinrichtung besteht darin, dass im Betrieb Geräusche auftreten, die auch innerhalb des Fahrzeugs wahrnehmbar sind. In der Regel handelt es sich um Geräusche, die durch plötzliche Druckschwankungen innerhalb des Schwingungsdämpfers auftreten. So hat man herausgefunden, dass z. B. eine plötzliche Änderung der Dämpfkraft von einer hohen Dämpfkrafteinstellung auf eine kleine Dämpfkrafteinstellung zu einem unangenehmen Geräusch führt. Dieses Geräusch wird von den sich entspannenden Bauteilen des Schwingungsdämpfers erzeugt.

Vielfach treten auch Strömungsgeräusche auf, die von dem Dämpfmedium verursacht werden. Es ist bekannt, dass Geräusche auftreten, wenn ein Dämpfventil von einer Durchlassposition in einer Schließposition umgeschaltet wird und dabei ein Ventilkörper mit vergleichsweise hoher Energie auf eine Sitzfläche aufschlägt. Nahezu alle Probleme basieren mehr oder weniger auf hydraulischen und/oder mechanischen Ursachen.

Es gibt aber auch z. B. Klappergeräusche, die während des Schwingungsdämpferbetriebs auftreten können und für die man bislang keine Lösung gefunden hat.

Die US 4 958 704 A beschreibt eine Dämpfventileinrichtung mit einem über einen Aktuator verstellbares Dämpfventil. Eine Spulenanordnung (15) weist einen zu einem Ventilgehäuse (23) separaten Rückschlusskörper (17) für einen Magnetflusskreis auf, wobei der Rückschlusskörper in radialer Richtung innerhalb des Ventilgehäuses spielfrei fixiert ist, indem der Rückschlusskörper mit einer Innenwandung des Ventilgehäuses eine Presspassung bildet.

Die Aufgabe der vorliegenden Erfindung besteht darin, eine Lösung für die Geräuschproblematik zu finden.

Die Aufgabe wird durch die Merkmale des Patentanspruchs 1 gelöst Die Frequenz der PWM der Spulenansteuerung liegt im Eigenfrequenzbereich der Kolbenstange. Durch umfangreiche Untersuchungen hat sich herausgestellt, dass sich die Schwingung als Welle auf der rohrförmigen Kolbenstange ausbildet. Die Kolbenstange bildet die Elastizität und die Dämpfventileinrichtung die Masse bzw. nur das Ventilgehäuse bilden die Masse des Systems. Bei der Spielpassung hat der Rückschlusskörper einen undefinierten Spalt zum Magnetgehäuse. Beim statistisch häufigsten Fall gleitet der Rückschlusskörper bei der Montage mit einer einseitigen Anlage zur Innenwandung des Ventilgehäuses. In der Endmontagestellung richtet sich der Rückschlusskörper an einer Bodenfläche des Ventilgehäuses aus. Liegt der erste Kontaktpunkt des Rückschlusskörpers auf der Bodenfläche nahe dem Kontakt der Mantelfläche, dann kippt der Rückschlusskörper über diesen Punkt, so dass es zu einem Mikrospalt an der Mantelfläche zur Innenwandung kommt. Durch Magnetostriktion kommt der Rückschlusskörper radial in Schwingung. Dieser Effekt wird noch verstärkt, wenn der Rückschlusskörper geschlitzt ist und damit eine gute Elastizität in diesem Bereich aufweist. Durch die Schwingung schlägt der Rückschlusskörper in der Eigenfrequenz an das Ventilgehäuse. Es wird also ein Impuls eingetragen und die Kolbenstange schwingt sich in der Eigenfrequenz hoch. Wird der Rückschlusskörper jedoch radial fixiert, so ist der Mikrospalt permanent geschlossen und der Rückschlusskörper ist an die große Masse des Ventilgehäuses angebunden. Die PWM kann jedoch nicht die große Masse, bestehend aus Ventilgehäuse und Kolbenstange permanent beschleunigen. Folglich tritt kein Klappergeräusch ausgehend vom Aktuator auf.

Die Konusverbindung stellt auch eine Form der Presspassung dar. Schon bei einer geringen axialen Belastung zentriert sich der Rückschlusskörper spielfrei.

Beispielsweise kann die Konusverbindung von einer in Umfangsrichtung verlaufenden Mantelfläche des Rückschlusskörpers gebildet werden. Über den Konuswinkel kann bestimmt werden, ob der Rückschlusskörper nach einer Schließkraft unabhängig von einer axialen Belastung im Ventilgehäuse über die sogenannte Selbsthemmung gehalten wird.

Alternativ kann die Selbstzentrierung auch über eine Konusverbindung von einer Stirnfläche des Rückschlusskörpers gebildet werden. Der Vorteil besteht darin, dass die Konusfläche an der Bodenfläche des Ventilgehäuses sehr leicht durch einen einfachen Prägevorgang erzeugt werden kann.

Alternativ oder in Kombination mit anderen Lösungen kann der Rückschlusskörper mittels einer Klebeverbindung im Ventilgehäuse fixiert sein. Auch hier gilt, dass die Klebeverbindung keine nennenswerten Kräfte übertragen muss, sondern nur eine Radialbewegung des Rückschlusskörpers verhindern soll.

Anhand der folgenden Figurenbeschreibung soll die Erfindung näher erläutert werden.

Es zeigt:
- Fig. 1: Dämpfventil in einer Schnittdarstellung
- Fig. 2 - 4: Rückschlusskörper als Einzelteil
- Fig. 5 u. 6: Konusverbindung des Rückschlusskörpers zum Ventilgehäuse gemäß der Erfindung
- Fig. 7: Klebeverbindung zwischen Rückschlusskörper und Ventilgehäuse
- Fig. 8: Befestigungsmittel zwischen Rückschlusskörper und Ventilgehäuse

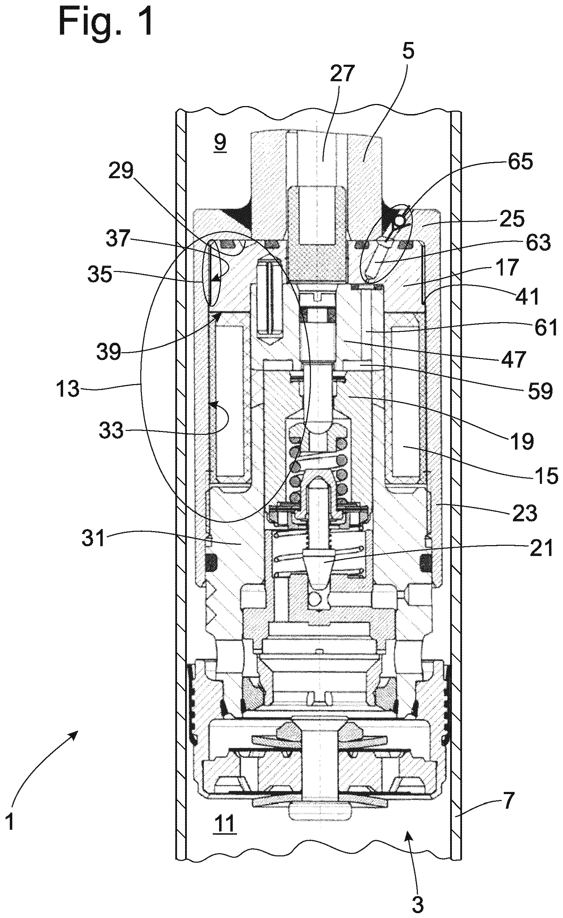

Die Figur 1 zeigt einen Ausschnitt aus einem Schwingungsdämpfer 1 im Bereich einer verstellbaren Dämpfventileinrichtung 3, die an einer Kolbenstange 5 befestigt ist. Die Kolbenstange 5 ist innerhalb eines mit Dämpfmedium gefüllten Zylinders 7 axial beweglich geführt, wobei die Dämpfventileinrichtung 3 den Zylinder 7 in einen kolbenstangenseitigen und einen kolbenstangenfernen Arbeitsraum 9;11 unterteilt.

Die Dämpfventileinrichtung 3 umfasst einen Aktuator 13, der über eine Spulenanordnung 15 und einen Rückschlusskörper 17 eine Magnetkraft auf einen Anker 19 ausübt, der wiederum mit einem Ventilkörper 21 in Wirkverbindung steht. Für die Erfindung ist die konkrete Ausgestaltung des Ventilkörpers 21 sowie der weiteren Ventile unerheblich, so dass die Erfindung auch bei wesentlich einfacheren Ausführungsformen angewendet werden kann. Hinsichtlich der Funktionsweise der Ventiltechnik wird auf die DE 198 22 448 A1 verwiesen.

Die Dämpfventileinrichtung 3 umfasst ein Ventilgehäuse 23 mit einem Boden 25, über den das Ventilgehäuse 23 mit der Kolbenstange 5 verbunden ist. Die Kolbenstange 5 ist rohrförmig ausgeführt und nimmt ein Versorgungskabel 27 für eine Spulenanordnung 15 auf. Zwischen einer innenseitigen Bodenfläche 29 des Bodens 25 und der Spulenanordnung 15 ist in Axialrichtung der Rückschlusskörper 17 verspannt. Ein Spulenträger 31 ist mit dem Ventilgehäuse 23 verbunden und sorgt für die notwendige Vorspannung auf die Spulenanordnung 15.

Der Rückschlusskörper 17 ist in radialer Richtung innerhalb des Ventilgehäuses 23 spielfrei fixiert. Damit wird verhindert, dass der Rückschlusskörper 17 aufgrund der hochfrequenten Ansteuerung der Spulenanordnung in radiale Schwingungen gerät und diese Schwingung auf die Kolbenstange 5 überträgt. In der Figur 1 bildet der Rückschlusskörper 17 mit einer Innenwandung 33 des Ventilgehäuses eine Presspassung 35. Dafür verfügt das Ventilgehäuse 23 über eine Passfläche 37. Um jedoch nicht die gesamte Innenwandung auf dem Fertigungsniveau der Passfläche 37 bearbeiten zu müssen, ist die Passfläche 37 zur restlichen Innenwandung 33 radial abgesetzt. Wie aus der Fig. 1, die in diesem Bereich unmaßstäblich ausgeführt ist, erkennbar ist, weist die Passfläche 37 einen geringfügig kleineren Innendurchmesser auf als die Innenwandung 33 im Bereich der Spulenanordnung 15.

Der Rückschlusskörper 17 verfügt ausgehend von einem Endbereich 39 über eine unmaßstäblich dargestellte Durchmessererweiterung 41, so dass nur ein Mantelflächenbereich die Presspassung 35 bildet.

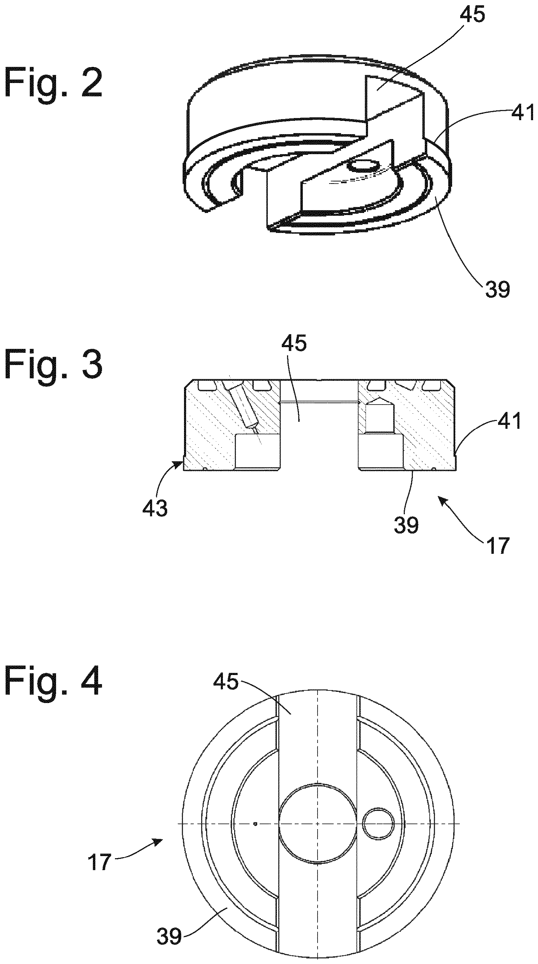

Die Figuren 2 bis 4 zeigen den Rückschlusskörper 17 als Einzelteil. Deutlich erkennbar ist eine querverlaufende Nut 45, die auch in der Figur 1 sichtbar ist und ein magnetisch leitendes Polelement 47 aufnimmt. Im Bereich der querverlaufenden Nut 45 weist der Rückschlusskörper die größte radiale Elastizität auf. Deshalb wird der die Presspassung 35 bildende Mantelflächenbereich 43 auch bevorzugt in diesem Bereich ausgeführt.

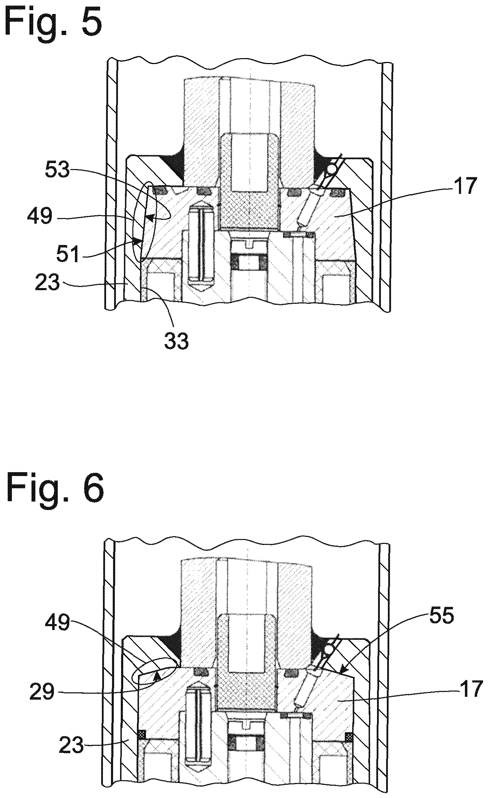

Die Figur 5 zeigt eine Ausführungsform, bei der der Rückschlusskörper 17 und die Innenwandung 33 des Ventilgehäuses eine Konusverbindung 49 bilden. Der Rückschlusskörper 17 verfügt in Umfangsrichtung über eine konische Mantelfläche 51, die in eine Konusfläche 53 der Innenwandung eingreift. Damit zentriert sich der Rückschlusskörper 17 radial spielfrei zur Innenwandung 33.

Die Fig. 6 zeigt eine Abwandlung zur Fig. 5. Abweichend wird die Konusverbindung 49 von einer Stirnfläche 55 des Rückschlusskörpers 17 und der Bodenfläche 29 gebildet. Wie bereits zur Fig. 1 ausgeführt, steht der Rückschlusskörper axial unter einer Vorspannung. Folglich zentriert sich der Rückschlusskörper über die stirnseitige Konusverbindung zum Ventilgehäuse.

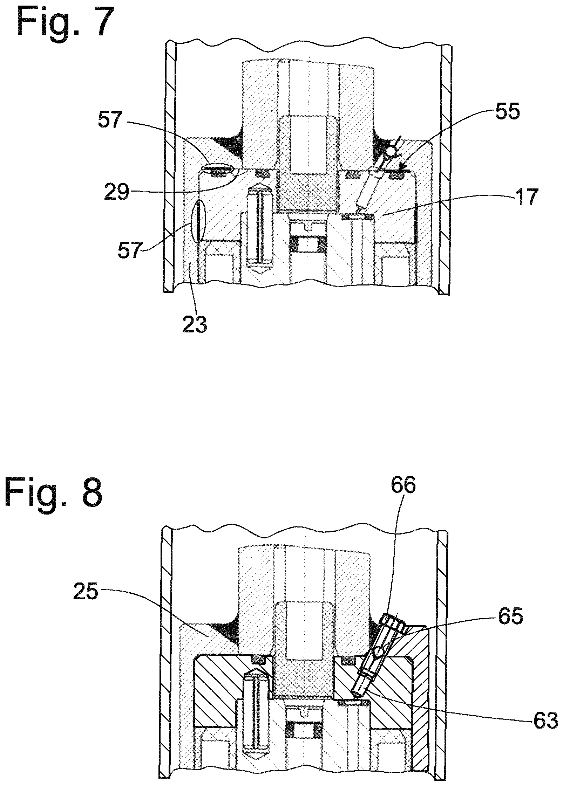

Mit der Fig. 7 soll dokumentiert werden, dass der Rückschlusskörper 17 auch mittels einer Klebeverbindung 57 im Ventilgehäuse 13 radial spielfrei fixiert sein kann. Beispielhaft ist die Klebeverbindung 57 zwischen der Stirnfläche 55 des Rückschlusskörpers 17 und der Bodenfläche 19 des Ventilgehäuses 23 ausgeführt. Alternativ kann die Klebeverbindung 57 auch zwischen der Innenwandung 33 und der Mantelfläche des Rückschlusskörpers 17 geschlossen sein.

Die Figur 1 zeigt einen Rückraum 59 zwischen dem Anker 19 und dem Polelement 47. In dem Polelement 47 ist mindestens ein Anschlusskanal 61 ausgeführt, der wiederum mit einer Abströmöffnung 63 im Rückschlusskörper verbunden ist. Der Abströmöffnung 63 schließt sich ein Rückschlagventil 65 an, das eventuell innerhalb der Dämpfventileinrichtung 3 gesammeltes Gas über das Rückschlagventil 65 in den kolbenstangenseitigen Arbeitsraum 9 abführt. In der Fig. 8 ist ein Ausschnitt der Dämpfventileinrichtung 3 im Bereich der Abströmöffnung 63 dargestellt. Abweichend zur Fig. 1 kommt zwischen dem Boden 25 des Ventilgehäuses 23 und dem Rückschlusskörper 17 ein separates Befestigungsmittel 66 zum Einsatz. Bevorzugt wird das Befestigungsmittel 66 von einem Schraubventil gebildet, das in den Rückschlusskörper 17 eingedreht wird. In Anbetracht des engen radialen Bauraums ist praktisch kein größerer radialer Bauraum notwendig, um das Schraubventil 65 einsetzen zu können.

### Bezugszeichen

- 1: Schwingungsdämpfer
- 3: Dämpfventileinrichtung
- 5: Kolbenstange
- 7: Zylinder
- 9: kolbenstangenseitigen Arbeitsraum
- 11: kolbenstangenferner Arbeitsraum
- 13: Aktuator
- 15: Spulenanordnung
- 17: Rückschlusskörper
- 19: Anker
- 21: Ventilkörper
- 23: Ventilgehäuse
- 25: Boden
- 27: Versorgungskabel
- 29: Bodenfläche
- 31: Spulenträger
- 33: Innenwandung
- 35: Presspassung
- 37: Passfläche
- 39: Endbereich
- 41: Durchmessererweiterung
- 43: Mantelflächenbereich
- 45: Nut
- 47: Polelement
- 49: Konusverbindung
- 51: konische Mantelfläche
- 53: Konusfläche
- 55: Stirnfläche
- 57: Klebeverbindung
- 59: Rückraum
- 61: Anschlusskanal
- 63: Abströmöffnung
- 65: Rückschlagventil
- 66: Befestigungsmittel

## Patentansprüche

1. Dämpfventileinrichtung (3), umfassend mindestens ein über einen Aktuator (13) verstellbares Dämpfventil (21), wobei der Aktuator (13) eine Spulenanordnung (15) und einen zu einem Ventilgehäuse (23) separaten Rückschlusskörper (17) für einen Magnetflusskreis aufweist, wobei der Rückschlusskörper (17) in radialer Richtung innerhalb des Ventilgehäuses (23) spielfrei fixiert ist, indem der Rückschlusskörper (17) mit einer Innenwandung (33) des Ventilgehäuses (23) eine Presspassung (35) bildet, **dadurch gekennzeichnet, dass** der Rückschlusskörper (17) und das Ventilgehäuse (23) eine Konusverbindung (49) bilden.

2. Dämpfventileinrichtung nach Anspruch 1, **dadurch gekennzeichnet, dass** die Konusverbindung (49) von einer in Umfangsrichtung verlaufenden Mantelfläche (51) des Rückschlusskörpers (17) gebildet wird.

3. Dämpfventileinrichtung nach Anspruch 1, **dadurch gekennzeichnet, dass** die Konusverbindung (49) von einer Stirnfläche (55) des Rückschlusskörpers (17) gebildet wird.

4. Dämpfventileinrichtung nach Anspruch 1, **dadurch gekennzeichnet, dass** der Rückschlusskörper (17) mittels einer Klebeverbindung (57) im Ventilgehäuse (23) fixiert ist.

## Claims

1. Damping valve device (3) comprising at least one damping valve (21) which is able to be adjusted via an actuator (13), wherein the actuator (13) has a coil arrangement (15) and a return body (17) for a magnetic flux circuit, which return body is separate from a valve housing (23), wherein the return body (17) is fixed without play in a radial direction within the valve housing (23) in that the return body (17) forms, together with an inner wall (33) of the valve housing (23), a press fit (35), **characterized in that** the return body (17) and the valve housing (23) form a conical connection (49).

2. Damping valve device according to Claim 1, **characterized in that** the conical connection (49) is formed by a lateral surface (51) of the return body (17), which lateral surface extends in a circumferential direction.

3. Damping valve device according to Claim 1, **characterized in that** the conical connection (49) is formed by an end surface (55) of the return body (17) .

4. Damping valve device according to Claim 1, **characterized in that** the return body (17) is fixed in the valve housing (23) by means of an adhesive connection (57).

## Revendications

1. Dispositif de soupape d'amortissement (3), comprenant au moins une soupape d'amortissement (21) qui est réglable par le biais d'un actionneur (13), l'actionneur (13) comportant un ensemble de bobine (15) et un corps de retour (17) destiné à un circuit de flux magnétique et séparé d'un boîtier de soupape (23), le corps de retour (17) étant fixé sans jeu dans une direction radiale à l'intérieur du boîtier de soupape (23), le corps de retour (17) formant un ajustement serré (35) avec une paroi intérieure (33) du boîtier de soupape (23), **caractérisé en ce que** le corps de retour (17) et le boîtier de soupape (23) forment une liaison conique (49).

2. Dispositif de soupape d'amortissement selon la revendication 1, **caractérisé en ce que** la liaison conique (49) est formée par une surface d'enveloppe (51) du corps de retour (17).

3. Dispositif de soupape d'amortissement selon la revendication 1, **caractérisé en ce que** la liaison conique (49) est formée par une face frontale (55) du corps de retour (17).

4. Dispositif de soupape d'amortissement selon la revendication 1, **caractérisé en ce que** le corps de retour (17) est fixé dans le boîtier de soupape (23) au moyen d'une liaison adhésive (57).
